# EUROPEAN PATENT APPLICATION

(11) **EP 4 446 364 A1**
(43) Date of publication of application: **16.10.2024**
(21) Application number: 22904258.5
(22) Date of filing: 07.12.2022
(51) Int. Cl.: C08J 3/12, B29B 9/16, B29C 45/00, C08K 5/09, C08L 33/10, B29K 33/04

(54) **METHACRYLIC RESIN MOLDING MATERIAL, RESIN MOLDED ARTICLE, VEHICLE MEMBER, HOUSING EQUIPMENT MEMBER, OPTICAL MEMBER, MEDICAL MEMBER, CONTAINER, AND METHOD FOR MANUFACTURING RESIN MOLDED ARTICLE**

(30) Priority: 08.12.2021 JP 2021199415
(71) Applicant: Mitsubishi Chemical Corporation, Tokyo 100-8251 (JP)
(72) Inventor: IMAOKA Shoutaro, Tokyo 100-8251 (JP)
(74) Representative: Vossius & Partner Patentanwälte Rechtsanwälte mbB
(86) International application number: PCT/JP2022/045081
(87) International publication number: WO 2023/106330

(57) **Abstract**

Provided is a methacrylic resin molding material containing methacrylic resin pellets to which a fatty acid is externally added, in which an externally added amount of the fatty acid is 0.002 parts by mass or more with respect to 100 parts by mass of the methacrylic resin pellets.

## Description

### BACKGROUND OF THE INVENTION

### Field of the Invention

The present invention relates to a methacrylic resin molding material, a resin molded product formed by molding methacrylic resin pellets, a vehicle member, an optical member, a container, a medical member, and a manufacturing method of a resin molded product.

Priority is claimed on Japanese Patent Application No. 2021-199415, filed in Japan on December 8, 2021, the entire contents of which are incorporated herein by reference.

### Description of Related Art

A methacrylic resin has been widely used as pellets of a vehicle member such as interior and exterior materials of vehicles, for example, a tail lamp cover, a head lamp cover, a meter panel, a pillar garnish, a front grill, and an emblem; building members; a housing equipment member such as a washstand, a bathtub, and a flush toilet bowl; an optical member such as a lens and a light guide; a container for cosmetics; and a medical member such as a cuvette.

When the methacrylic resin is applied to these applications, the methacrylic resin is molded by, for example, a molding method such as press molding, injection molding, gas-assisted injection molding, welding molding, extrusion molding, blowing molding, film molding, hollow molding, multilayer molding, and melt spinning. For example, in the injection molding, methacrylic resin pellets are transported into a high-temperature cylinder of an injection molding machine. Subsequently, the molten resin is injected into a metal mold processed into various shapes. Subsequently, a molded product obtained by cooling is released from the metal mold and taken out as a product. Furthermore, in the press molding, the resin is set between upper and lower press metal molds, and a product is molded by pressing.

Japanese Unexamined Patent Application, First Publication No. 2009-137068 discloses a manufacturing method of a thick molded article by adhering a lubricant to a surface of a granular thermoplastic resin and performing injection molding by adjusting a cylinder temperature of an injection molding machine to a temperature higher than a glass transition temperature of the thermoplastic resin.

Japanese Patent (Granted) Publication No. 3615618 discloses a manufacturing method of a thick molded article, in which an acrylic polymer and particles based on a monovalent salt of a saturated or unsaturated fatty acid as an external lubricant are used, and the thick molded article is manufactured by injection molding.

Japanese Patent (Granted) Publication No. 4734313 discloses a blocking prevention method of (meth)acrylic block copolymer pellets, in which a lubricant is applied to pellets of a (meth)acrylic block copolymer containing a polymer block mainly composed of an acrylate-based monomer and a polymer block mainly composed of a methacrylate-based monomer.

Japanese Unexamined Patent Application, First Publication No. 2004-168056 discloses a manufacturing method of a thermoplastic resin pellet containing an additive, in which the additive is attached to a surface of a thermoplastic resin pellet using a device including a stirrer provided with a screw, which rotates and revolves along an inner wall surface of a conical casing, and spray equipment for spraying the additive.

### SUMMARY OF THE INVENTION

In Patent Documents 1, 3, and 4, in the injection molding of the acrylic resin, when molding is performed under severe molding conditions such as a high-screw rotation speed or a long cycle, there is a problem that the appearance is likely to be defective (mainly silver) and the yield is reduced.

In Patent Documents 1 to 4, when a lubricant other than a fatty acid is used, there is a problem that, when a molten resin flows into a high-temperature metal mold and is solidified, and then the metal mold is removed, mold releasability is insufficient.

The present invention has been made in view of the above-described circumstances, and an object of the present invention is to provide a methacrylic resin molding material with which it is possible to obtain a resin molded product which has excellent mold releasability from a high-temperature metal mold, is less likely to generate appearance defects, and has excellent color tone; a resin molded product formed of the methacrylic resin molding material; a vehicle member, an optical member, a container, and a medical member; and a manufacturing method of a resin molded product.

The present invention has the following configurations.
[1] A methacrylic resin molding material comprising:
   methacrylic resin pellets to which a fatty acid is externally added,
   wherein an externally added amount of the fatty acid is 0.002 parts by mass or more with respect to 100 parts by mass of the methacrylic resin pellets.
[2] The methacrylic resin molding material according to [1],
   wherein the externally added amount of the fatty acid is 0.005 parts by mass to 1 part by mass with respect to 100 parts by mass of the methacrylic resin pellets.
[3] The methacrylic resin molding material according to [1] or [2],
   wherein the fatty acid is a linear hydrocarbon compound.
[4] The methacrylic resin molding material according to any one of [1] to [3],
   wherein a melting point of the fatty acid is 50°C or higher.
[5] The methacrylic resin molding material according to any one of [1] to [4],
   wherein the fatty acid is a fatty acid having 8 to 22 carbon atoms.
[6] The methacrylic resin molding material according to any one of [1] to [5],
   wherein the fatty acid is palmitic acid, stearic acid, myristic acid, lauric acid, or montanoic acid.
[7] The methacrylic resin molding material according to any one of [1] to [6],
   wherein the methacrylic resin pellets contain a methacrylic polymer, and
   a content proportion of a repeating unit derived from methyl methacrylate in the methacrylic polymer is 70% by mass or more.
[8] The methacrylic resin molding material according to any one of [1] to [7],
   wherein the methacrylic resin pellets contain a methacrylic polymer, and
   a content proportion of a repeating unit derived from methyl methacrylate in the methacrylic polymer is 80% by mass or more.
[9] The methacrylic resin molding material according to any one of [1] to [8],
   wherein the methacrylic resin pellets contain a methacrylic polymer, and
   a content proportion of a repeating unit derived from methyl methacrylate in the methacrylic polymer is 90% by mass or more.
[10] The methacrylic resin molding material according to any one of [1] to [9],
   wherein the methacrylic resin molding material is a methacrylic resin molding material for press molding, extrusion molding, injection molding, or film molding.
[11] The methacrylic resin molding material according to any one of [1] to [9],
   wherein the methacrylic resin molding material is a methacrylic resin molding material for injection molding.
[12] The methacrylic resin molding material according to any one of [1] to [11],
   wherein a surface area of the methacrylic resin pellets is 10 mm² to 450 mm².
[13] A use of the methacrylic resin molding material according to any one of [1] to [9] for press molding, extrusion molding, injection molding, or film molding.
[14] A use of the methacrylic resin molding material according to any one of [1] to [9] for injection molding.
[15] A resin molded product obtained by molding the methacrylic resin molding material according to any one of [1] to [9].
[16] A vehicle member, a housing equipment member, an optical member, a medical member, or a container obtained by molding the methacrylic resin molding material according to any one of [1] to [9].
[17] A manufacturing method of a resin molded product containing a methacrylic resin molding material in which a fatty acid is adhered or applied to methacrylic resin pellets, the manufacturing method comprising:
   molding the methacrylic resin molding material in which an externally added amount of the fatty acid is 0.002 parts by mass or more with respect to 100 parts by mass of the methacrylic resin pellets to obtain a resin molded product.
[18] The manufacturing method according to [17],
   wherein the resin molded product is obtained by injection-molding the methacrylic resin molding material.
[19] The manufacturing method according to [17] or [18],
   wherein the resin molded product is obtained by injection-molding the methacrylic resin molding material at a metal mold temperature of 70°C or higher.

### Effects of the Invention

According to the present invention, it is possible to provide a methacrylic resin molding material with which it is possible to obtain a resin molded product which has excellent mold releasability from a high-temperature metal mold, is less likely to generate appearance defects, and has excellent color tone; a resin molded product formed of the methacrylic resin molding material; a vehicle member, an optical member, a container, and a medical member; and a manufacturing method of a resin molded product.

### DETAILED DESCRIPTION OF THE INVENTION

Hereinafter, an embodiment of the present invention will be described in detail.
"to" indicating a numerical range means that the numerical values described before and after "to" are included as the lower limit value and the upper limit value. Hereinafter, embodiments of the present invention will be described in detail, but the present invention is not limited to the following embodiments, and can be variously modified and implemented within the scope of the gist thereof.

### Methacrylic resin molding material

The methacrylic resin molding material according to the embodiment of the present invention is a methacrylic resin molding material containing methacrylic resin pellets to which a fatty acid is externally added, in which an externally added amount of the fatty acid is 0.002 parts by mass or more with respect to 100 parts by mass of the methacrylic resin pellets.

Hereinafter, a case where the fatty acid is adhered or applied to the methacrylic resin pellets is referred to as "external addition". On the other hand, a case where the fatty acid is contained in the methacrylic resin pellets is referred to as "internal addition". The methacrylic resin molding material according to the embodiment of the present invention is obtained by externally adding the fatty acid to the methacrylic resin pellets. According to the methacrylic resin molding material according to the embodiment of the present invention, it is possible to obtain a resin molded product having excellent mold releasability from a high-temperature metal mold, appearance, and color tone. Mechanism

In the present invention, a mechanism by which a resin molded product having excellent mold releasability from a high-temperature metal mold, appearance, and color tone can be obtained by externally adding the fatty acid to the methacrylic resin pellets is considered as follows.

The fatty acid is a chain-like hydrocarbon compound having at least one carboxyl group in the molecule. The fatty acid has a carboxyl group at a portion of a chain-like hydrocarbon, and at one terminal. Among the chain-like hydrocarbons, a linear hydrocarbon is preferable. A hydrocarbon moiety is hydrophobic, and a terminal carboxy group is a hydrophilic group. When the fatty acid is internally added to the methacrylic resin pellets, and the methacrylic resin and the fatty acid are melted, it is considered that the fatty acid has a high affinity for the hydrophobic methacrylic resin in the chain-like hydrocarbon moiety, and forms an aggregate in which the carboxyl group moiety is aggregated toward a center portion. In this case, the fatty acid present on a surface of the methacrylic resin pellets is reduced. Therefore, in the present invention, it is considered that, by externally adding the fatty acid to the methacrylic resin pellets in a predetermined range, it is possible to achieve both the effect of suppressing appearance defects and the effect of obtaining excellent color tone.

Since the fatty acid has a carboxyl group, after the methacrylic resin pellets to which the fatty acid is externally added is injection-molded, the carboxy group of the fatty acid is adsorbed on a surface of a metal mold. As a result, a coating layer consisting of the fatty acid is formed between the methacrylic resin and the metal mold. However, when a metal mold temperature is increased, the above-described adsorption force tends to be weakened by a functional group other than the carboxyl group, such as a hydroxyl group and an amide group. Therefore, in the present invention, by externally adding the fatty acid to the methacrylic resin pellets, a resin molded product having a coating layer formed quickly during the injection molding and having excellent mold releasability even in a state in which the metal mold temperature is high can be obtained. Methacrylic resin pellets

The methacrylic resin pellets contained in the methacrylic resin molding material according to the embodiment of the present invention contain a methacrylic resin composition. The methacrylic resin composition in the present invention contains at least a methacrylic polymer (synonymous with a methacrylic resin).

### Methacrylic polymer

The methacrylic polymer is a polymer containing a repeating unit derived from methyl methacrylate (hereinafter, also referred to as "methyl methacrylate unit"). Since the methacrylic resin composition in the present invention contains the methacrylic polymer, the color tone of the resin molded product to be obtained is improved, thermal decomposition of the resin molded product is suppressed, and the color tone and moldability of the resin molded product can be improved. In addition, the methacrylic polymer is preferably a polymer in which the methyl methacrylate unit is a main component. As one aspect, the expression "the methyl methacrylate unit is a main component" means that a content proportion of the methyl methacrylate unit in the methacrylic polymer (100% by mass) is 70% by mass or more. The content proportion of the methyl methacrylate unit in the methacrylic polymer (100% by mass) is more preferably 80% by mass or more and still more preferably 90% by mass or more.

For the above-described reason, the content proportion of the methyl methacrylate unit in the methacrylic polymer (100% by mass) is preferably 70% by mass or more. As the methacrylic polymer, for example, a homopolymer of methyl methacrylate, and a copolymer containing 70% by mass or more and less than 100% by mass of the methyl methacrylate unit and more than 0% by mass and 30% by mass or less of a repeating unit derived from a monomer other than methyl methacrylate (hereinafter, also referred to as "other monomer units") are exemplary examples.

The monomer other than methyl methacrylate, forming the other monomer units, is not particularly limited as long as the monomer is copolymerizable with methyl methacrylate. The monomer other than methyl methacrylate may be a monofunctional monomer having one radically polymerizable double bond in one molecule, or may be a polyfunctional monomer having two or more radically polymerizable double bonds in one molecule. From the viewpoint of excellent balance of fluidity, moldability, and thermal decomposition properties of the methacrylic polymer, the monomer other than methyl methacrylate is preferably an acrylic acid ester.

When the methacrylic polymer contains a repeating unit derived from an acrylic acid ester (hereinafter also referred to as "acrylic acid ester unit") as the other monomer units, in the methacrylic polymer (100% by mass), it is preferable to contain 70% by mass or more and less than 100% by mass of the methyl methacrylate unit and more than 0% by mass and 30% by mass or less of the acrylic acid ester unit; more preferable to contain 80% by mass or more and 99.9% by mass or less of the methyl methacrylate unit and 0.1% by mass or more and 20% by mass or less of the acrylic acid ester unit; and it is still more preferable to contain 90% by mass or more and 99.5% by mass or less of the methyl methacrylate unit and 0.5% by mass or more and 10% by mass or less of the acrylic acid ester unit.

As the acrylic acid ester, for example, methyl acrylate, ethyl acrylate, n-propyl acrylate, iso-propyl acrylate, n-butyl acrylate, iso-butyl acrylate, sec-butyl acrylate, tert-butyl acrylate, n-hexyl acrylate, cyclohexyl acrylate, n-octyl acrylate, 2-ethylhexyl acrylate, isobornyl acrylate, glycidyl acrylate, tetrahydrofurfuryl acrylate, norbornyl acrylate, adamantyl acrylate, dicyclopentenyl acrylate, dicyclopentanyl acrylate, 2-hydroxyethyl acrylate, and 2-hydroxypropyl acrylate are exemplary examples. Among these, methyl acrylate, ethyl acrylate, butyl acrylate, cyclohexyl acrylate, benzyl acrylate, 2-ethylhexyl acrylate, or 2-hydroxyethyl acrylate is preferable, and methyl acrylate or ethyl acrylate is more preferable. The acrylic acid ester may be used alone or in combination of two or more kinds thereof.

As another aspect of the methacrylic polymer, a polymer (A) containing a repeating unit derived from a (meth)acrylic acid ester monomer (hereinafter, also referred to as "(meth)acrylic acid ester unit"; here, the "(meth)acrylic acid ester" means "acrylic acid ester", "methacrylic acid ester", or "methacrylic acid ester and acrylic acid ester") and a structural unit derived from a ring structure (hereinafter, referred to as "ring structural unit") in the main chain is an exemplary example. As the ring structural unit, for example, a glutaric acid anhydride structural unit, a maleic acid anhydride structural unit, a glutarimide structural unit, a lactone ring structural unit, and an N-substituted maleimide structural unit are exemplary examples. The ring structural unit may be used alone or in combination of two or more kinds thereof.

The lower limit value of the content proportion of the (meth)acrylic acid ester unit in the polymer (A) is not particularly limited. From the viewpoint that the obtained resin molded product has excellent color tone, and excellent workability and mechanical characteristics without impairing inherent properties of the methacrylic resin, the lower limit value of the content proportion of the (meth)acrylic acid ester unit in the polymer (A) is preferably 80 mol% or more, more preferably 90 mol% or more, and still more preferably 94 mol% or more with respect to the total molar amount (100 mol%) of the repeating units (including the structural unit; the same applies hereinafter) contained in the polymer (A). The upper limit value of the content proportion of the (meth)acrylic acid ester unit in the polymer (A) is not particularly limited. From the viewpoint of excellent heat resistance of the resin molded product to be obtained, the upper limit value of the content proportion of the (meth)acrylic acid ester unit in the polymer (A) is preferably 99.999 mol% or less, more preferably 99.9 mol% or less, and still more preferably 99.5 mol% or less with respect to the total molar amount (100 mol%) of the repeating units contained in the polymer (A). The upper limit value and lower limit value described above can be optionally combined. For example, it is preferably 80 to 99.999 mol%, more preferably 90 to 99.9 mol%, and still more preferably 94 to 99.5 mol%.

The lower limit value of the content proportion of the ring structural unit in the polymer (A) is not particularly limited. From the viewpoint of excellent heat resistance of the resin molded product to be obtained, the lower limit value of the content proportion of the ring structural unit in the polymer (A) is preferably 0.001 mol% or more, more preferably 0.1 mol% or more, and still more preferably 0.5 mol% or more with respect to the total molar amount (100 mol%) of the repeating units contained in the polymer (A). The upper limit value of the content proportion of the ring structural unit in the polymer (A) is not particularly limited. From the viewpoint of excellent heat resistance of the resin molded product to be obtained and viewpoint of suppressing molding coloration and having excellent molding appearance and weather resistance, the upper limit value of the content proportion of the ring structural unit in the polymer (A) is preferably 10 mol% or less, more preferably 3 mol% or less, and still more preferably 0.3 mol% or less with respect to the total molar amount (100 mol%) of the repeating units contained in the polymer (A). The upper limit value and lower limit value described above can be optionally combined. For example, it is preferably 0.001 to 10 mol%, more preferably 0.01 to 3 mol%, and still more preferably 0.05 to 0.3 mol%.

Among the (meth)acrylic acid esters other than methyl methacrylate, forming the (meth)acrylic acid ester unit, as the acrylic acid ester, the acrylic acid esters mentioned in the description of the methacrylic polymer above are exemplary examples. In addition, as the methacrylic acid ester other than methyl methacrylate, for example, ethyl methacrylate, n-propyl methacrylate, iso-propyl methacrylate, n-butyl methacrylate, iso-butyl methacrylate, sec-butyl methacrylate, tert-butyl methacrylate, n-hexyl methacrylate, cyclohexyl methacrylate, n-octyl methacrylate, 2-ethylhexyl methacrylate, isobornyl methacrylate, glycidyl methacrylate, tetrahydrofurfuryl methacrylate, norbornyl methacrylate, adamantyl methacrylate, dicyclopentenyl methacrylate, dicyclopentanyl methacrylate, 2-hydroxyethyl methacrylate, and 2-hydroxypropyl methacrylate are exemplary examples.

These (meth)acrylic acid esters may be used alone or in combination of two or more kinds thereof.

The polymer (A) can contain a constitutional unit derived from a monomer having a carboxyl group (hereinafter, also referred to as "monomer unit having a carboxyl group"). Some of the monomer units having a carboxyl group can form a ring structural unit by, for example, a cyclization reaction between ester groups, and introduce a ring structural unit into the main chain of a methacrylic polymer. Therefore, the monomer unit having a carboxyl group may be contained in the methacrylic polymer. As the monomer having a carboxyl group, for example, acrylic acid, methacrylic acid (hereinafter, one or both of acrylic acid and methacrylic acid are referred to as "(meth)acrylic acid"), 2-(hydroxymethyl)acrylic acid, 2-(hydroxyethyl)acrylic acid, and crotonic acid are exemplary examples. From the viewpoint of excellent heat resistance of the resin molded product to be obtained, methacrylic acid is preferable. The monomer having a carboxyl group may be used alone or in combination of two or more kinds thereof.

As one aspect of the polymer (A), a polymer containing a repeating unit (A1) derived from methyl methacrylate (hereinafter, also referred to as "unit (A1)") and a repeating unit (A2) derived from (meth)acrylic acid (hereinafter, also referred to as "unit (A2)") as the (meth)acrylic acid ester unit, and containing a glutaric acid anhydride structural unit (A3) (hereinafter, also referred to as "unit (A3)") as the ring structural unit is an exemplary example.

By containing the unit (A3) in the polymer (A), the heat resistance of the resin molded product to be obtained can be easily improved. The unit (A3) is represented by the following chemical structural formula (1). 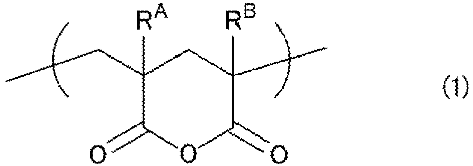 (In the formula, R^{A} and R^{B} each independently represent a hydrogen atom or a methyl group)

The lower limit value of the content proportion of the unit (A1) in the polymer (A) is not particularly limited. From the viewpoint that the obtained resin molded product has excellent color tone, and excellent workability and mechanical characteristics without impairing inherent properties of the methacrylic resin, the lower limit value of the content proportion of the unit (A1) in the polymer (A) is preferably 80 mol% or more, more preferably 90 mol% or more, and still more preferably 94 mol% or more with respect to the total molar amount (100 mol%) of the repeating units contained in the polymer (A). The upper limit value of the content proportion of the unit (A1) in the polymer (A) is not particularly limited. From the viewpoint of excellent heat resistance of the resin molded product to be obtained, the upper limit value of the content proportion of the unit (A1) in the polymer (A) is preferably 99.4 mol% or less, more preferably 99 mol% or less, and still more preferably 98 mol% or less with respect to the total molar amount (100 mol%) of the repeating units contained in the polymer (A). The upper limit value and lower limit value described above can be optionally combined. The content proportion of the unit (A1) in the polymer (A) is, for example, preferably 80 to 99.4 mol%, more preferably 90 to 99 mol%, and still more preferably 94 to 98 mol%.

As the unit (A2), from the viewpoint of excellent heat resistance of the resin molded product to be obtained, methacrylic acid is preferable.

The lower limit value of the content proportion of the unit (A2) in the polymer (A) is not particularly limited. From the viewpoint of excellent heat resistance and mechanical properties of the resin molded product to be obtained, the lower limit value of the content proportion of the unit (A2) in the polymer (A) is preferably 0.5 mol% or more, more preferably 1 mol% or more, and still more preferably 2 mol% or more with respect to the total molar amount (100 mol%) of the repeating units contained in the polymer (A). The upper limit value of the content proportion of the unit (A2) in the polymer (A) is not particularly limited. From the viewpoint that the obtained resin molded product has excellent molding appearance, low water absorbability, and excellent moldability without impairing inherent properties of the acrylic resin, the upper limit value of the content proportion of the unit (A2) in the polymer (A) is preferably 20 mol% or less, more preferably 7 mol% or less, and still more preferably 3.5 mol% or less with respect to the total molar amount (100 mol%) of the repeating units contained in the polymer (A). The upper limit value and lower limit value described above can be optionally combined. The content proportion of the unit (A2) in the polymer (A) is, for example, preferably 0.5 to 20 mol%, more preferably 1 to 7 mol%, and still more preferably 2 to 3.5 mol%.

The lower limit value of the content proportion of the unit (A3) in the polymer (A) is not particularly limited. From the viewpoint of excellent heat resistance of the resin molded product to be obtained, the lower limit value of the content proportion of the unit (A3) in the polymer (A) is preferably 0.001 mol% or more, more preferably 0.01 mol% or more, and still more preferably 0.05 mol% or more with respect to the total molar amount (100 mol%) of the repeating units contained in the polymer (A). The upper limit value of the content proportion of the unit (A3) in the polymer (A) is not particularly limited. From the viewpoint of suppressing molding coloration and having excellent molding appearance and weather resistance of the resin molded product to be obtained, the upper limit value of the content proportion of the unit (A3) in the polymer (A) is preferably 10 mol% or less, more preferably 3 mol% or less, and still more preferably 0.3 mol% or less. The upper limit value and lower limit value described above can be optionally combined. The content proportion of the unit (A3) in the polymer (A) is, for example, preferably 0.001 to 10 mol%, more preferably 0.01 to 3 mol%, and still more preferably 0.05 to 0.3 mol%.

The unit (A3) may be a unit formed by a cyclization reaction between a methoxycarbonyl group derived from the unit (A1) and a carboxyl group derived from the adjacent unit (A2) in a copolymer obtained by copolymerizing methyl methacrylate and (meth)acrylic acid.

In the present invention, the content of each unit in the methacrylic resin such as the polymer (A) is a value calculated from ¹H-NMR measurement. Specifically, the content of each unit in the methacrylic resin such as the polymer (A) can be calculated by a method described in PCT International Publication No. WO2019/013186.

A production method of the methacrylic polymer is not particularly limited. As the above-described production method, for example, a bulk polymerization method, a suspension polymerization method, an emulsion polymerization method, and a solution polymerization method are exemplary examples. From the viewpoint of excellent productivity, a bulk polymerization method or a suspension polymerization method is preferable.

In the methacrylic polymer, a method for producing the polymer (A) containing the unit (A1), the unit (A2), and the unit (A3) is not particularly limited. For example, production method described in PCT International Publication No. WO2017/022393 and PCT International Publication No. WO2019/013186 can be used.

### Other additives

The methacrylic resin pellets in the present invention may usually contain one or two or more kinds of various additives internally added in the methacrylic resin pellets, within a range in which the effects of the present invention are not impaired.

As the additive, for example, an ultraviolet absorber, a light diffusing agent, an antioxidant, a colorant, a pigment, a dye, a heat stabilizer, a reinforcing agent, a filler, a flame retardant, a foaming agent, a lubricant, a plasticizer, an antistatic agent, a light stabilizer, an impact resistance improver, a fluidity improver, a mold release agent, and a processing elasticity imparting agent are exemplary examples.

### Shape, size, and surface area

The methacrylic resin pellets in the present invention are supplied to, for example, a molding machine such as an injection molding machine. A shape of the methacrylic resin pellets is not particularly limited, and for example, a cylindrical shape, a spherical shape, a cubical shape, or the like is preferable, a cylindrical shape or a spherical shape is more preferable, and a cylindrical shape is still more preferable.

A size of the methacrylic resin pellets is not particularly limited, but for example, as the cylindrical shape, it is preferable that a length (axis length) in an axial direction of the cylinder is 1.5 to 6 mm, a length of a major axis of a plane orthogonal to the axial direction is approximately 1.5 to 5 mm, and a length of a minor axis of the plane orthogonal to the axial direction is approximately 1.5 to 4.5 mm. As the other shape, it is preferable that the size is equivalent to a cylindrical pellet having the above-described dimensions.

A surface area of the methacrylic resin pellets is also not particularly limited, but as the cylindrical shape, it is, for example, preferably 10 mm² to 450 mm², more preferably 30 mm² to 300 mm², and particularly preferably 40 mm² to 200 mm². As the other shape, it is preferable that the surface area is equivalent to a surface area of a cylindrical pellet having the above-described dimensions. When the surface area of the methacrylic resin pellets is within the above-described range, it is possible to externally add the fatty acid in a predetermined range, and it is possible to provide a resin molded product having excellent appearance and mold releasability from a high-temperature metal mold.

### Fatty acid

The fatty acid is a chain-like hydrocarbon compound having at least one carboxyl group in the molecule. The chain-like hydrocarbon compound having at least one carboxyl group in the molecule means a compound in which a carbon atom to which the carboxyl group is bonded is a constituent atom of the carbon chain. The carbon chain in the chain-like hydrocarbon compound having at least one carboxyl group in the molecule may be saturated or unsaturated, and may be linear or branched. Among the above-described fatty acids, a linear hydrocarbon compound is preferable.

From the viewpoint of improving the mold releasability from the metal mold during injection molding and further improving the appearance of the resin molded product to be obtained, the lower limit of the melting point of the fatty acid is preferably 50°C or higher. The reason for this is not clear, but is presumed as follows. When the melting point of the fatty acid is 50°C or higher, a viscosity of the methacrylic resin composition can be suppressed from decreasing when being released from the high-temperature metal mold, and thus the fatty acid contained in the methacrylic resin composition is likely to diffuse in the molten resin when the metal mold is filled with the resin during the injection molding. As a result, the fatty acid liquefied or condensed and adhered to the surface of the metal mold is diffused and migrated to the methacrylic resin composition injected into the metal mold later, and thus the fatty acid is present in a high content proportion in the surface and the vicinity of the surface of the finally obtained resin molded product. As a result, the above-described action and effect are easily obtained. The melting point of the fatty acid is more preferably 55°C or higher and still more preferably 60°C or higher.

On the other hand, from the viewpoint of further improving the mold releasability of the resin molded product to be obtained, the upper limit of the melting point of the fatty acid is preferably 100°C or lower. The reason for this is not clear, but is presumed as follows. When the melting point of the fatty acid is 100°C or lower, the above-described fatty acid volatilized in the high-temperature metal mold is liquefied or condensed on the surface of the metal mold, so that a coating layer consisting of the above-described fatty acid is easily formed on the surface of the metal mold. As a result, the above-described action and effect are easily obtained. The melting point of the fatty acid is more preferably 90°C or lower and still more preferably 80°C or lower.

The preferred upper limit and lower limit of the melting point of the fatty acid described above can be optionally combined. For example, the melting point of the fatty acid is preferably 50°C or higher and 100°C or lower, more preferably 55°C or higher and 90°C or lower, and still more preferably 60°C or higher and 80°C or lower.

The fatty acid is preferably one or both of a saturated fatty acid having 8 to 22 carbon atoms and an unsaturated fatty acid having 8 to 22 carbon atoms; more preferably one or both of a saturated fatty acid having 10 to 20 carbon atoms and an unsaturated fatty acid having 10 to 20 carbon atoms; still more preferably one or both of a saturated fatty acid having 12 to 18 carbon atoms and an unsaturated fatty acid having 12 to 18 carbon atoms; and particularly preferably a saturated fatty acid having 16 carbon atoms or an unsaturated fatty acid having 16 carbon atoms.

As the saturated fatty acid having 8 to 22 carbon atoms, for example, caprylic acid (having 8 carbon atoms), pelargonic acid (having 9 carbon atoms), capric acid (having 10 carbon atoms), lauric acid (having 12 carbon atoms), myristic acid (having 14 carbon atoms), pentadecyl acid (having 15 carbon atoms), palmitic acid (having 16 carbon atoms), margaric acid (having 17 carbon atoms), stearic acid (having 18 carbon atoms), arachidic acid (having 20 carbon atoms), heneicosylic acid (having 21 carbon atoms), and behenic acid (22 carbon atoms) are exemplary examples.

As the unsaturated fatty acid having 8 to 22 carbon atoms, for example, myristoleic acid (having 14 carbon atoms), palmitoleic acid (having 16 carbon atoms), sapienic acid (having 16 carbon atoms), oleic acid (having 18 carbon atoms), elaidic acid (having 18 carbon atoms), vaccenic acid (having 18 carbon atoms), gadoleic acid (having 20 carbon atoms), eicosenoic acid (having 20 carbon atoms), erucic acid (having 22 carbon atoms), linoleic acid (having 18 carbon atoms), eicosadienoic acid (having 20 carbon atoms), docosadienoic acid (having 22 carbon atoms), α-linolenic acid (having 18 carbon atoms), γ-linolenic acid (having 18 carbon atoms), pinoenic acid (having 18 carbon atoms), α-eleostearic acid (having 18 carbon atoms), β-eleostearic acid (having 18 carbon atoms), mead acid (having 20 carbon atoms), dihomo-γ-linolenic acid (having 20 carbon atoms), eicosatrienoic acid (having 20 carbon atoms), stearidonic acid (having 18 carbon atoms), arachidonic acid (having 20 carbon atoms), eicosatetraenoic acid (having 20 carbon atoms), adrenic acid (having 22 carbon atoms), bospentanoic acid (having 18 carbon atoms), eicosapentaenoic acid (having 20 carbon atoms), osbond acid (having 22 carbon atoms), clupanodonic acid (having 22 carbon atoms), and docosahexaenoic acid (having 22 carbon atoms) are exemplary examples.

These fatty acids may be used alone or in combination of two or more kinds thereof.

Among the above-described fatty acids, from the viewpoint that the resin molded product has excellent mold releasability from a high-temperature metal mold and the appearance defects of the resin molded product is less likely generated, a saturated fatty acid having 8 to 22 carbon atoms is preferable; and from the viewpoint of being difficult to contamination of the metal mold during molding, palmitic acid, stearic acid, myristic acid, lauric acid, or montanoic acid is preferable, palmitic acid, stearic acid, or myristic acid is particularly preferable, and palmitic acid is most preferable.

The externally added amount of the fatty acid is 0.002 parts by mass or more with respect to 100 parts by mass of the methacrylic resin pellets. From the viewpoint of excellent appearance and mold releasability from a high-temperature metal mold of the resin molded product to be obtained, the externally added amount of the fatty acid is preferably 0.005 parts by mass or more, more preferably 0.01 parts by mass or more, and particularly preferably 0.1 parts by mass or more with respect to 100 parts by mass of the methacrylic resin pellets. The upper limit value of the externally added amount of the fatty acid is not particularly limited, but from the viewpoint of cloudiness and color tone of the resin molded product to be obtained, it is preferably 1 part by mass or less, more preferably 0.7 parts by mass or less, still more preferably 0.5 parts by mass or less, and particularly preferably 0.3 parts by mass or less. The upper limit value and lower limit value described above can be optionally combined. The externally added amount of the fatty acid is, for example, preferably 0.002 to 1 part by mass, more preferably 0.005 to 0.7 parts by mass, still more preferably 0.01 to 0.5 parts by mass, and particularly preferably 0.1 to 0.3 parts by mass.

The methacrylic resin molding material according to the embodiment of the present invention may contain a lubricant as long as the effects of the present invention are not impaired. As the lubricant, for example, a fatty acid soap, a metal soap, a paraffin wax, a hydrocarbon oil, an aliphatic alcohol, a fatty acid ester, a low-molecular-weight polyethylene, a synthetic wax, and silicone are exemplary examples. The lubricant to be used is preferably a lubricant which does not impair the characteristics of the methacrylic resin, such as color tone, weather resistance, and scratch resistance. Production method of methacrylic resin molding material

A method for producing the methacrylic resin molding material according to the embodiment of the present invention, in which the fatty acid is externally added to the methacrylic resin pellets in the present invention, is not particularly limited. Examples of the above-described production method include a method of dry-blending; a method of spraying the fatty acid of adding a powder of the fatty acid to the methacrylic resin pellets in the present invention, and then stirring the mixture using a stirring device; and a method of dispersing the methacrylic resin pellets in a liquid containing the fatty acid, and then removing a solvent on the surface of the methacrylic resin pellets are exemplary examples.

As the method of dry-blending, a method in which the methacrylic resin pellets and a metal salt of the fatty acid are mixed with each other using a mixer such as a general ribbon blender, a tumbler, a Nauta mixer, and a Henschel mixer is an exemplary example.

As the above-described stirring device used in the spraying and stirring the methacrylic resin pellets with the fatty acid, a stirring device including a bottomed cylindrical container, a screw which rotates and revolves along an inner wall surface of the container, and a spraying unit which sprays the fatty acid onto the methacrylic resin pellets put into the container is an exemplary example.

As the spraying unit, for example, a spray nozzle or the like for spraying the fatty acid is an exemplary example. The spraying unit may include a heating unit such as a heater for heating the fatty acid.

The methacrylic resin pellets in the present invention are charged into a container of such a stirring device, and the fatty acid is sprayed from the spraying unit in a powdery, liquid, or molten state onto the methacrylic resin pellets in the present invention in the container under stirring to be attached.

Next, the methacrylic resin pellets to which the fatty acid is sprayed and attached are further uniformly stirred by a screw which rotates and revolves along the inner wall surface of the container. As a result, the fatty acid can be externally added to the methacrylic resin pellets uniformly.

In order to externally add the fatty acid to the methacrylic resin pellets more uniformly, it is preferable to change a temperature in the container according to the type of the fatty acid. For example, by raising the temperature in the container to approximately 60°C to 80°C, the fatty acid can be externally added to the methacrylic resin pellets more uniformly.

As a method of changing the temperature in the container, for example, a method of allowing a heated inert gas to flow into the container, a method of heating the inside of the container with a heater, and a method of controlling the temperature by allowing a heat medium to flow into a jacket of the container are exemplary examples.

As the method of dispersing the methacrylic resin pellets in the present invention in a liquid containing the fatty acid and then removing a solvent on the surface of the methacrylic resin pellets, for example, a method of preparing a solution or a dispersion liquid, in which the total amount of fatty acid added to the solvent is set to 0.05% by mass to 1 % by mass, and spraying the solution or the dispersion liquid to the methacrylic resin pellets, or a method of treating the methacrylic resin pellets by charging the methacrylic resin pellets to the solution are exemplary examples.

As a method of applying the fatty acid to the methacrylic resin pellets in the present invention by spraying the fatty acid-containing liquid, for example, a method in which the methacrylic resin pellets are placed on a transfer device such as a conveyor, and the fatty acid-containing liquid is continuously sprayed when passing through a sprayer is an exemplary example.

As a method of charging the methacrylic resin pellets to the fatty acid-containing liquid to adhere the fatty acid to the methacrylic resin pellets in the present invention, a generally known method can be carried out. As the method of adhering to the methacrylic resin pellets, a method of charging the fatty acid-containing liquid and the methacrylic resin pellets into a mixing tank provided with a stirrer, mixing the fatty acid-containing liquid and the methacrylic resin pellets at a temperature of 0°C or higher and a boiling point of the solvent or lower for a predetermined time, and the separating the methacrylic resin pellets and the liquid by a filtration or the like is an exemplary example.

Next, the solvent is dried by blowing air or hot air as necessary. At this time, since the fatty acid does not volatilize, the fatty acid remains on the surface of the methacrylic resin pellets as it is. Therefore, after the drying, it is possible to externally add the fatty acid to the methacrylic resin pellets.

As the solvent, a solvent usually used can be used. As the solvent, it is preferable to use a solvent in which the methacrylic resin is not dissolved or hardly observed to be dissolved in the solvent, depending on formulation of the methacrylic resin of the methacrylic resin pellets in the present invention. As the solvent, for example, water is an exemplary example. As a preferred solvent, from the viewpoint of efficiency and workability of the drying step, a solvent having a boiling point at normal pressure of 30°C to 150°C is preferable, and from the viewpoint of cost and safety, water is particularly preferable.

### Resin molded product

The resin molded product according to the embodiment of the present invention is obtained by molding the methacrylic resin molding material according to the embodiment of the present invention.

The resin molded product according to the embodiment of the present invention is not particularly limited as long as it is molded by a known molding method such as press molding, injection molding, gas-assisted injection molding, welding molding, extrusion molding, blowing molding, film molding, hollow molding, multilayer molding, and melt spinning. As the methacrylic resin molding material according to the embodiment of the present invention, from the viewpoint of obtaining excellent plasticizing properties, a methacrylic resin molding material for press molding, extrusion molding, injection molding, or film molding is preferable; a methacrylic resin molding material for press molding, extrusion molding, or injection molding is more preferable; a methacrylic resin molding material for extrusion molding or injection molding is still more preferable; and a methacrylic resin molding material for injection molding is most suitable.

The lower limit of the temperature of the metal mold used in the molding step is not particularly limited, but from the viewpoint of further improving the mold releasability of the obtained resin molded product and further improving the production efficiency, the lower limit thereof is preferably 40°C or higher, more preferably 50°C or higher, still more preferably 60°C or higher, and most preferably 70°C or higher. The upper limit of the temperature of the metal mold used in the molding step is not particularly limited, but from the viewpoint of obtaining a resin molded product having excellent mechanical strength, the upper limit thereof is preferably 200°C or lower, more preferably 150°C or lower, still more preferably 100°C or lower, and most preferably 90°C or lower.

As specific examples of the resin molded product according to the embodiment of the present invention, a vehicle members such as interior and exterior materials of vehicles, for example, a tail lamp cover, a head lamp cover, a meter panel, a pillar garnish, a front grill, and an emblem; building members; a housing equipment member such as a washstand, a bathtub, and a flush toilet bowl; an optical member such as a lens and a light guide; a container for cosmetics; and a medical member such as a cuvette are exemplary examples. Among these, the resin molded product according to the embodiment of the present invention is particularly suitable for a vehicle member, a housing equipment member, an optical member, a container, and a medical member, because of its excellent appearance, weather resistance, color tone, and chemical resistance.

### Examples

Hereinafter, the present invention will be described in more detail with reference to Examples and Comparative Example, but the present invention is not limited to Examples described below.

### Used raw material

The raw materials used in Examples and Comparative Examples are as follows.

PMMA: methacrylic resin "ACRYPET (registered trademark) VH" manufactured by Mitsubishi Chemical Group Corporation; shape: cylindrical, surface area: 95 mm², size: major diameter of 3.2 mm, minor diameter of 2.2 mm, and height of 3.0 mm
Fatty acid: palmitic acid and stearic acid
Fatty acid compound: stearyl alcohol
Fatty acid compound: stearyl stearate
Fatty acid compound: stearamide

### Example 1

As a stirring device including a cylindrical container and a screw which rotated and revolved along an inner wall surface of the container, a Henschel mixer (model name: FM10C/1, manufactured by Nippon Coke & Engineering Co., Ltd.) was used.

Cooling water was circulated through a jacket of the above-described container to maintain a jacket temperature at 75°C.

As a fatty acid, palmitic acid (melting point: approximately 60°C) was used.

Methacrylic resin pellets (trade name: VH, manufactured by Mitsubishi Chemical Group Corporation) were put into the container of the stirring device, the container was sealed, and the methacrylic resin pellets were stirred while powdery fatty acid was put in, thereby obtaining a methacrylic resin molding material of Example 1. At this time, a temperature of the methacrylic resin molding material was approximately 75°C.

The externally added amount of the palmitic acid with respect to the total mass (100 parts by mass) of the methacrylic resin pellets was 0.25 parts by mass.

The obtained methacrylic resin molding material was evaluated as follows. The results are shown in Table 1.

### Examples 2 to 4

A methacrylic resin molding material was produced and evaluated in the same manner as in Example 1, except that the externally added amount of the palmitic acid with respect to the total mass (100 parts by mass) of the methacrylic resin pellets was changed as shown in Table 1. The results are shown in Table 1.

### Example 5

A methacrylic resin molding material was produced and evaluated in the same manner as in Example 1, except that stearic acid (melting point: approximately 69°C) was used as the fatty acid, the externally added amount of the fatty acid with respect to the total mass (100 parts by mass) of the methacrylic resin pellets was changed as shown in Table 1. The results are shown in Table 1.

### Comparative Example 1

As a kneading device, a twin-screw extruder (model name: TEM35, manufactured by Shibaura Machine CO., LTD.) was used.

Methacrylic resin pellets (trade name: VH, manufactured by Mitsubishi Chemical Corporation) and palmitic acid were supplied to the twin-screw extruder, and melt-kneaded at a cylinder temperature of the extruder of 250°C to obtain a methacrylic resin molding material of Comparative Example 1. The internally added amount of the palmitic acid with respect to the total mass (100 parts by mass) of the methacrylic resin pellets was 0.05 parts by mass.

The obtained methacrylic resin molding material was evaluated as follows. The results are shown in Table 1.

### Comparative Example 2

A methacrylic resin molding material was produced and evaluated in the same manner as in Comparative Example 1, without blending the fatty acid with the methacrylic resin pellets. The results are shown in Table 1.

### Comparative Example 3

A methacrylic resin molding material was produced and evaluated in the same manner as in Comparative Example 1, except that stearyl alcohol was externally added to the methacrylic resin pellets instead of the fatty acid, and the externally added amount of the stearyl alcohol with respect to the total mass (100 parts by mass) of the methacrylic resin pellets was set to 0.05 parts by mass. The results are shown in Table 1. Comparative Example 4

A methacrylic resin molding material was produced and evaluated in the same manner as in Comparative Example 1, except that stearyl stearate was externally added to the methacrylic resin pellets instead of the fatty acid, and the externally added amount of the stearyl stearate with respect to the total mass (100 parts by mass) of the methacrylic resin pellets was set to 0.05 parts by mass. The results are shown in Table 1. Comparative Example 5

A methacrylic resin molding material was produced and evaluated in the same manner as in Comparative Example 1, except that stearamide was externally added to the methacrylic resin pellets instead of the fatty acid, and the externally added amount of the stearamide with respect to the total mass (100 parts by mass) of the methacrylic resin pellets was set to 0.05 parts by mass. The results are shown in Table 1.

### Evaluation of silver defect occurrence frequency

The pellet-like methacrylic resin composition obtained in Examples and Comparative Examples was dried with hot air at 80°C for approximately 16 hours, and then subjected to injection molding under the following conditions, and the presence or absence of silver defects on the molded product was visually determined, and the occurrence frequency thereof was measured. The results are shown in Table 1.
- Injection molding machine: model name: EC75-SXII, manufactured by Shibaura Machine CO., LTD.
- Metal mold: plate-shaped molded product having a size of 120 mm × 140 mm × 4 mm
- Cylinder temperature: 230°C
- Hopper lower temperature: 50°C
- Metal mold temperature: 60°C

### (1) Evaluation of screw rotation speed dependence

- Cycle: 60 see
- Screw rotation speed: 50 rpm, 90 rpm, or 120 rpm
- Sampling shot number: 10 shots for each screw rotation speed

### Evaluation of mold releasability from high-temperature metal mold during injection molding

### (1) Mold releasability during injection molding

As an index of mold releasability during injection molding, a protrusion pin pressure was measured by the following method. The pellet-like methacrylic resin composition obtained in Examples and Comparative Examples was dried with hot air at 80°C for approximately 16 hours, supplied to an injection molding machine (model name: EC5-SXII, manufactured by Shibaura Machine CO., LTD.) set to a cylinder temperature of 260°C, and subjected to continuous molding under conditions of a metal mold temperature of 90°C and an injection pressure of 80 MPa, using a metal mold provided with a degassing part (capable of molding a disk-like molded product having a vertical diameter of 75 mm and a thickness of 3 mm; a gate part is provided at the center of the disk-like metal mold; and one protrusion pin for releasing the molded article is disposed in a central part of the disk-like metal mold and four protrusion pins are arranged in a peripheral part of the metal mold at equal intervals), and a protrusion pin pressure (unit: MPa) was measured at a time of releasing the molded product from the metal mold by a pressure sensor installed behind the protrusion pin in the central part. As the value of the protrusion pin pressure was lower, the mold releasability was more excellent. The results are shown in Table 1.

### (2) Molding appearance after injection molding

As an index of molding appearance after the injection molding, the presence or absence of releasing defects was observed by the following method. A disk-like molded product was continuously molded 40 times by the same method as the evaluation of the mold releasability during the injection molding. The surface of the obtained molded product was visually observed, and when surface roughness due to releasing defects from the metal mold was observed on the surface of the molded product even in one shot, it was determined that the releasing was poor. The results are shown in Table 1.

### (3) Color tone

For a test piece of the resin molded product, using a spectrophotometer "U-4100" manufactured by Hitachi High-Tech Corporation, a yellow index (YI) value with an optical path length of 140 mm was measured in accordance with JIS K7105 by a C light source transmission method. The measurement was performed on three test pieces, and the average value thereof was calculated and evaluated according to the following standard. The results are shown in Table 1.
A: Yl value was less than 10.0.
B: YI value was 10.0 or more.

**Table 1**

| | Externally added lubricant | | Internally added lubricant | | Plasticizing properties during injection molding | | | | Mold releasability during injection molding | | | Color tone of molded article | |
|---|---|---|---|---|---|---|---|---|---|---|---|---|---|
| | Type | Added amount (%) | Type | Added amount (%) | Silver occurrence frequency (%) | | | Evaluation | Protrusion pressure (MPa) | Releasing defect | Evaluation | Optical path length 140 mm | |
| | | | | | Screw rotation speed dependence | | | | | | | YI | Transmittance at 500 nm (%) |
| | | | | | 50 rpm | 90 rpm | 120 rpm | | | | | | |
| Example 1 | Palmitic acid | 0.25 | - | - | 0 | 20 | 0 | O | 37 | N | O | 2.7 | 90.1 |
| Example 2 | Palmitic acid | 0.10 | - | - | 0 | 0 | 0 | O | 39 | N | O | 2.8 | 89.9 |
| Example 3 | Palmitic acid | 0.05 | - | - | 0 | 0 | 0 | O | 40 | N | O | 2.4 | 90.3 |
| Example 4 | Palmitic acid | 0.01 | - | - | 0 | 10 | 30 | O | 43 | N | O | 2.3 | 90.0 |
| Example 5 | Stearic acid | 0.05 | - | - | 0 | 0 | 10 | O | 39 | N | O | 2.5 | 90.0 |
| Comparative Example 1 | - | - | - | - | 0 | 100 | 100 | X | 50 | Y | X | 2.5 | 90.2 |
| Comparative Example 2 | - | - | Palmitic acid | 0.05 | 0 | 100 | 100 | X | 38 | N | O | 2.3 | 90.1 |
| Comparative Example 3 | Stearyl alcohol | 0.05 | - | - | 0 | 10 | 10 | O | 48 | Y | X | 2.4 | 90.4 |
| Comparative Example 4 | Stearyl stearate | 0.05 | - | - | 0 | 0 | 10 | O | 48 | Y | X | 2.3 | 90.1 |
| Comparative Example 5 | Stearamide | 0.05 | - | - | 0 | 20 | 20 | O | 47 | Y | X | 2.8 | 89.5 |

From the results shown in Table 1, it was found that, in the methacrylic resin molding materials of Examples 1 to 5, since the fatty acid was externally added to the surface of the methacrylic resin pellets, the occurrence of appearance defects was less likely to occur, and the molding material had excellent color tone.

In the methacrylic resin molding material of Comparative Example 1, it was found that, although the mold releasability from a high-temperature metal mold was excellent, the frequency of occurrence of silver defects increased as the screw rotation speed increased or the cycle time increased, and the occurrence of the appearance defects was likely to occur as compared with Examples 1 to 5. It is considered that the difference is due to the fact that the fatty acid was present inside the methacrylic resin pellets, not on the surface thereof.

In the methacrylic resin molding material of Comparative Example 2, the protrusion pin pressure was 50 MPa, which was higher than that of Examples 1 to 5, and poor releasing was also confirmed. In addition, although the frequency of occurrence of silver defects increased as the screw rotation speed increased or the cycle time increased, and the occurrence of the appearance defects was likely to occur as compared with Examples 1 to 5. It is considered that the difference is due to the absence of the fatty acid in the methacrylic resin pellets.

In the methacrylic resin molding material of Comparative Example 3, the protrusion pin pressure was 48 MPa, which was higher than that of Examples 1 to 5, and poor releasing was also confirmed. It is considered that the difference is due to the use of the stearyl alcohol instead of the fatty acid.

In the methacrylic resin molding material of Comparative Example 4, the protrusion pin pressure was 48 MPa, which was higher than that of Examples 1 to 5, and poor releasing was also confirmed. It is considered that the difference is due to the use of the stearyl stearate instead of the fatty acid.

In the methacrylic resin molding material of Comparative Example 5, the protrusion pin pressure was 47 MPa, which was higher than that of Examples 1 to 5, and poor releasing was also confirmed. It is considered that the difference is due to the use of the stearamide instead of the fatty acid.

## Claims

1. A methacrylic resin molding material comprising:
methacrylic resin pellets to which a fatty acid is externally added,
wherein an externally added amount of the fatty acid is 0.002 parts by mass or more with respect to 100 parts by mass of the methacrylic resin pellets.

2. The methacrylic resin molding material according to Claim 1,
wherein the externally added amount of the fatty acid is 0.005 parts by mass to 1 part by mass with respect to 100 parts by mass of the methacrylic resin pellets.

3. The methacrylic resin molding material according to Claim 1,
wherein the fatty acid is a linear hydrocarbon compound.

4. The methacrylic resin molding material according to Claim 1,
wherein a melting point of the fatty acid is 50°C or higher.

5. The methacrylic resin molding material according to Claim 1,
wherein the fatty acid is a fatty acid having 8 to 22 carbon atoms.

6. The methacrylic resin molding material according to Claim 1,
wherein the fatty acid is palmitic acid, stearic acid, myristic acid, lauric acid, or montanoic acid.

7. The methacrylic resin molding material according to Claim 1,
wherein the methacrylic resin pellets contain a methacrylic polymer, and
a content proportion of a repeating unit derived from methyl methacrylate in the methacrylic polymer is 70% by mass or more.

8. The methacrylic resin molding material according to Claim 1,
wherein the methacrylic resin pellets contain a methacrylic polymer, and
a content proportion of a repeating unit derived from methyl methacrylate in the methacrylic polymer is 80% by mass or more.

9. The methacrylic resin molding material according to Claim 1,
wherein the methacrylic resin pellets contain a methacrylic polymer, and
a content proportion of a repeating unit derived from methyl methacrylate in the methacrylic polymer is 90% by mass or more.

10. The methacrylic resin molding material according to Claim 1,
wherein the methacrylic resin molding material is a methacrylic resin molding material for press molding, extrusion molding, injection molding, or film molding.

11. The methacrylic resin molding material according to Claim 10,
wherein the methacrylic resin molding material is a methacrylic resin molding material for injection molding.

12. The methacrylic resin molding material according to Claim 1,
wherein a surface area of the methacrylic resin pellets is 10 mm² to 450 mm².

13. A use of the methacrylic resin molding material according to any one of Claims 1 to 9 for press molding, extrusion molding, injection molding, or film molding.

14. A use of the methacrylic resin molding material according to any one of Claims 1 to 9 for injection molding.

15. A resin molded product obtained by molding the methacrylic resin molding material according to any one of Claims 1 to 9.

16. A vehicle member, a housing equipment member, an optical member, a medical member, or a container obtained by molding the methacrylic resin molding material according to any one of Claims 1 to 9.

17. A manufacturing method of a resin molded product containing a methacrylic resin molding material in which a fatty acid is adhered or applied to methacrylic resin pellets, the manufacturing method comprising:
molding the methacrylic resin molding material in which an externally added amount of the fatty acid is 0.002 parts by mass or more with respect to 100 parts by mass of the methacrylic resin pellets to obtain a resin molded product.

18. The manufacturing method according to Claim 17,
wherein the resin molded product is obtained by injection-molding the methacrylic resin molding material.

19. The manufacturing method according to Claim 17,
wherein the resin molded product is obtained by injection-molding the methacrylic resin molding material at a metal mold temperature of 70°C or higher.
